# EUROPÄISCHE PATENTSCHRIFT

(11) **EP 1 998 427 B1**
(45) Veröffentlichungstag und Bekanntmachung des Hinweises auf die Patenterteilung: **30.09.2015**
(21) Anmeldenummer: 08153508.0
(22) Anmeldetag: 28.03.2008
(51) Int. Cl.: H02P 3/16, H02P 3/26, H02K 7/12, B60L 7/24, B60T 13/58

(54) **Bremsanlage eines Kraftfahrzeugs mit einer elektrischen Rekuperationsbremse**
Braking device of a motor vehicle with an electric recuperation brake
Installation de frein d'un véhicule automobile doté d'un frein de récupération électrique

(30) Priorität: 31.05.2007 DE 102007025478
(43) Veröffentlichungstag der Anmeldung: 03.12.2008
(73) Patentinhaber: Bayerische Motoren Werke Aktiengesellschaft, 80809 München (DE)
(72) Erfinder: Pruckner, Alfred, 81545, München (DE)

(56) Entgegenhaltungen:
- DE-B- 1 026 349
- DE-B- 1 207 225
- US-A- 3 621 929

## Beschreibung

Die Erfindung betrifft eine Bremsanlage eines Kraftfahrzeugs nach dem Oberbegriff des Anspruchs 1. Eine solche Bremsanlage ist bspw. aus der DE 10 26 349 B oder aus der DE 17 88 077 A bekannt. Weiterhin verwiesen wird auf die DE 10 2004 042 028 A1 und wegen einer Bezugnahme auf eine mechanische Keilbremse noch beispielshalber auf die DE 10 2005 052 689 A1.

Grundsätzlich ist es bekannt, dass bei Kraftfahrzeugen, die zumindest anteilig von einem Elektromotor angetrieben werden können, so bspw. bei den sog. Hybrid-Fahrzeugen, die beim Abbremsen des Kraftfahrzeugs freiwerdende Bremsenergie anteilig durch die sog. Rekuperation zurück gewonnen werden kann, indem der Elektromotor dann als elektrischer Generator betrieben wird und die beim Abbremsen des Fahrzeugs in diesem gewonnene elektrische Energie zur zumindest kurzzeitigen Speicherung in einen Akkumulator oder in Hochleistungs-Kondensatoren eingeleitet wird. Jedoch sind die mit den typischen Elektromotoren erzeugbaren Bremsmomente erheblich geringer als die mittels herkömmlicher Fzg.-Bremsanlagen erzeugbaren Bremsmomente, so dass insbesondere für eine intensivere Bremsung (vorzugsweise an der Fahrzeug-Vorderachse) weiterhin eine letztlich auf die Fzg.-Räder einwirkende mechanische Bremse am Fahrzeug vorzusehen ist. Üblicherweise werden hierfür die üblichen Scheiben-Bremsanlagen mit an sich üblicher ABS-Regelung und EPS-Regelung verwendet, wobei jedoch die Regelung des aufzubringenden Bremsmoments als solches im Hinblick auf das zusätzlich über den Elektromotor bzw. über die dann als Generator arbeitende Elektromaschine aufgebrachte Bremsmoment ausgelegt ist.

Dies ist insofern aufwändig, als zwei Regelsysteme für eine gleiche Anforderung, nämlich für das Abbremsen des Fahrzeugs, benötigt werden. Auch ist es erforderlich, für das weiterhin vorgesehene übliche mechanische Bremssystem die für dessen Funktion erforderliche Energie bereit zu stellen. Jedenfalls der erstgenannte Nachteil kann mit dem Stand der Technik nach den beiden eingangs erstgenannten Schriften behoben werden.

Hiermit soll für eine Bremsanlage nach dem Oberbegriff des Anspruchs 1 eine Verbesserung hinsichtlich Ausfallsicherheit aufgezeigt werden (= Aufgabe der vorliegenden Erfindung).
Die Lösung dieser Aufgabe ist dadurch gekennzeichnet, dass eine eine Betätigung des mechanischen Bremselements bewirkende Verschwenkbewegung des Stators der Elektromaschine vom Fahrer des Kraftfahrzeugs mittels eines Bedienelements (Bremspedals) mechanisch initiierbar ist, indem am Stator der Elektromaschine ein Mitnehmer vorgesehen ist, auf den das Bedienelement derart einwirken kann, dass mit dessen Betätigung die Elektromaschine dann, wenn diese nicht als Rekuperationsbremse wirken kann, wie vorstehend (im Oberbegriff des Anspruchs 1) beschrieben eine Betätigung des Bremselements verursachend, verschwenkt wird.

Zunächst ist vorgeschlagen, das (maximale) Bremsmoment der Elektromaschine im Bremsbetrieb mechanisch zu verstärken und hierfür ein geeignetes Bremselement sowie eine geeignete Betätigung desselben vorzusehen. Ein solcher mechanischer Verstärker kann bspw. ein Keil sein. So kann bspw. die an sich bekannte Technik einer Trommelbremse für das Bremselement verwendet werden, welche im Bremsbetrieb bekanntlich eine Verstärkung um das 10-fache und mehr erreicht. Es kann aber auch eine sog. und dem Fachmann bekannte Keilbremse Verwendung finden, welche einen Keil zwischen die Bremsscheibe und die Bremsbacke einer Scheibenbremse schiebt, wobei jeweils diese Betätigung der Trommelbremse oder Keilbremse durch die Elektromaschine selbst erfolgt, genauer durch deren Abstützmoment initiiert wird. Die Stellgröße der Bremsbetätigung wird also durch die besagte Elektromaschine erzeugt, indem diese drehbar bzw. verschwenkbar gegenüber bspw. der Fzg.-Karosserie gelagert ist und die Drehmomenten-Abstützung der Elektromaschine beim rekuperativen Bremsbetrieb derselben vorzugsweise gegen eine Federkraft (allgemein gegen ein Kraftspeicherelement) wirkt. Ein gegen diese Federkraft (oder dgl.) erfolgendes Verschwenken der Elektromaschine bei Übergang vom Motorbetrieb in den Generatorbetrieb ruft die Betätigung eines vorzugsweise selbstverstärkenden mechanischen Bremselements hervor und zwar allgemein mittels eines sog. Übertragungselements.

Je höher also das von der Elektromaschine aufgebrachte Bremsmoment ist, desto größer ist eine Verdrehung/Verschwenkung der Elektromaschine gegenüber der Abstützung, bspw. der Fzg.-Karosserie. Das Maß (bzw. der Betrag) dieser VerdrehungNerschwenkung kann bspw. mittels eines Seilzugs (bzw. allgemein mittels eines mechanischen Übertragungselements) an ein vorzugsweise verstärkend wirkendes mechanisches Bremselement (wie eine genannte Trommelbremse oder eine genannte Keilbremse) übertragen und in diesem/dieser dazu verwendet werden, das jeweils zu betätigende Element dieses Bremselements (bspw. den Keil der Keilbremse oder einen die Bremsbacken der Trommelbremse spreizenden Aktor) anzusteuern, d.h. zu betätigen.

Es kann das die Drehmoment-Abstützung der Elektromaschine im Generatorbetrieb, d.h. beim Abbremsen des Fahrzeugs, im Sinne einer Steuerung der an das Bremselement übertragenen Bremskraft beeinflussende Federelement solchermaßen definiert vorgespannt sein, dass eine Verdrehung (= ein Verschwenken) der Elektromaschine und somit eine Erzeugung einer zusätzlichen Bremswirkung am besagten Bremselement erst mit Auftreten eines in seiner Größe definierten Bremsmoments stattfindet.

Selbstverständlich ist auch für den Antriebsfall, d.h. dass die Elektromaschine als ein das Fahrzeug zumindest teilweise antreibender Elektromotor arbeitet, eine Drehmomentabstützung vorzusehen, die vorzugsweise als ein fester Anschlag ausgebildet ist.

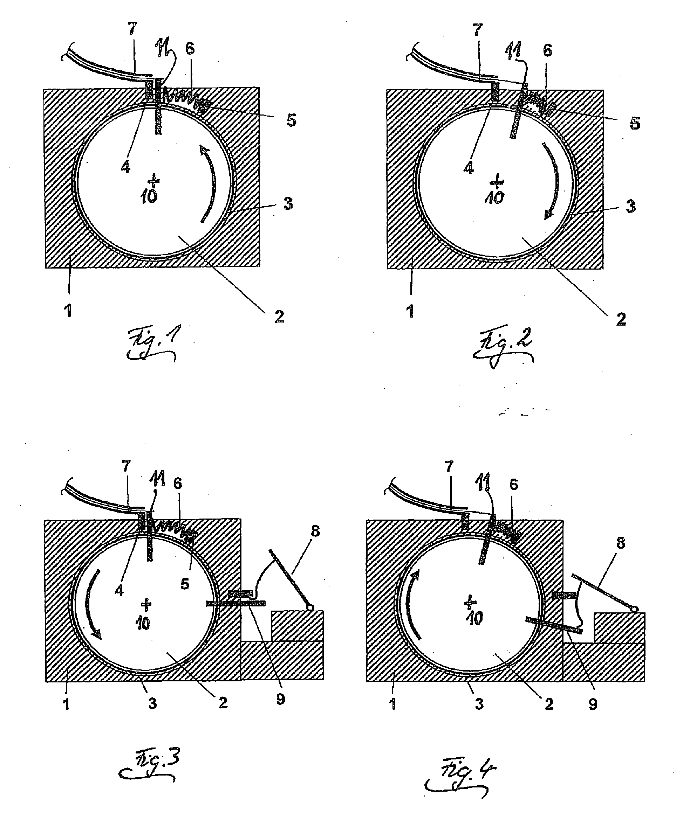

Ehe die Erfindung weiter beschrieben wird, sei zunächst deren Prinzip anhand der beigefügten Figuren 1, 2 nochmals erläutert, in denen eine Elektromaschine in erfindungsgemäßer Anordnung sowie mit einem angekoppeltem sog. Übertragungselement zu einem figürlich nicht dargestellten mechanischen Bremselement stark abstrahiert (im Schnitt) dargestellt ist.

In Figur 1 ist eine Elektromaschine 2, die in einem Kraftfahrzeug bspw. in der Karosserie 1 desselben gelagert ist, im Betrieb als Elektromotor dargestellt, der dann zumindest teilweise als Antriebsaggregat für das Kraftfahrzeug fungiert. In Figur 2 fungiert diese Elektromaschine 2 als Rekuperationsbremse und wird demzufolge in bekannter Weise als Generator betrieben, was hier durch den entgegen gesetzten Drehsinn (jeweils durch einen Pfeil dargestellt) zu Fig.1 dargestellt ist.

Die Elektromaschine 2, genauer deren Stator, der ebenso wie deren Rotor nicht separat dargestellt ist, ist in der Karosserie 1 über eine Drehlagerung 3 um die (zur Zeichenebene senkrecht stehende) Rotationsachse 10 des Elektromaschinen-Rotors um ein gewisses Maß verschwenkbar gelagert. Beschränkt wird diese Verschwenk-Freigängigkeit durch einen am Elektromaschinen-Stator angebrachten Mitnehmer 11, der zwischen einem karosseriefesten Antriebsanschlag 4 und - unter Zwischenlage eines DruckFederelements 6 - einem weiteren ebenfalls karosseriefesten Druckfederlager 5 zusammen mit dem Stator um die Rotationsachse 10 verschwenkt werden kann. Am freien Ende dieses Mitnehmers 11 (alternativ an einer geeigneten anderen Stelle der Elektromaschine, genauer an deren Stator) ist (hier) ein mechanisches Übertragungselement 7 befestigt, das (hier) als Seilzug ausgebildet ist und zu einem nicht figürlich dargestellten, durch dieses Übertragungselement 7 betägtigbaren Bremselement führt, welches letztlich auf zumindest ein Rad des Kraftfahrzeugs einwirkt bzw. bremsend einwirken kann. Dieses kann bspw. als Trommelbremse oder sog. Keilbremse ausgebildet sein und vorzugsweise nach dem bekannten Prinzip der mechanischen Bremskraft-Verstärkung arbeiten, welches darauf basiert, dass die Bremskraft aufgrund der Rotation des abzubremsenden Elements (hier des noch rotierenden Fzg.-Rades) verstärkt wird. (Zur genannten Keilbremse wird beispielshalber auf die eingangs bereits genannte DE 10 2005 052 689 A1 verwiesen).

Wird die Elektromaschine 2 gemäß Fig.1 als Elektromotor betrieben, so ist deren Stator drehmomentmäßig über den Mitnehmer 11 am Antriebsanschlag 4 abgestützt. Wird die Elektromaschine 2 hingegen gemäß Fig.2 als Rekuperationsbremse und somit als Generator betrieben, so führt das dann entgegen gerichtete Stützmoment dazu, dass der Stator mit dem Mitnehmer 11 gemäß Pfeil verschwenkt wird, woraufhin sich der Stator/Mitnehmer 11 unter Zwischenschaltung des Druckfederelements 6 am Druckfederlager 5 abstützt. Mit dieser Verschwenkbewegung gemäß Pfeil wird das mechanische Übertragungselement 7 (= Seilzug) um eine gewisse Wegstrecke mitgenommen und betätigt so das genannte Bremselement im Bremssinne.

Dabei sei ausdrücklich darauf hingewiesen, dass hier lediglich das Prinzip dargestellt ist. Insbesondere kann das mechanische Übertragungselement (7) auch anders ausgebildet sein. Beispielsweise kann das mechanische Bremselement, also bspw. die Trommelbremse, derart direkt über der Elektromaschine angeordnet sein, dass deren Verschwenk- oder Verdrehbewegung bei Umschalten vom Motorbetrieb zum Generatorbetrieb quasi direkt (über den Stator) das Bremselement betätigt, also bspw. die BremsBacken direkt gegen die Trommel drückt, was einen zwischengeschalteten Seilzug als Übertragungselement überflüssig macht. Auch bei einer mechanischen Keilbremse ist eine Anordnung möglich, bei welcher der verschwenkende Stator direkt oder über einen Hebel oder dgl. die Keilbremse betätigt bzw. aktiviert.

In den Figuren 3, 4 ist in gleicher Prinzip-Darstellung eine erfindungsgemäße Bremsanlage gezeigt. Demnach ist eine eine Betätigung des mechanischen Bremselements bewirkende Verschwenkbewegung des Stators der Elektromaschine 2 vom Fahrer des Kraftfahrzeugs mittels eines Bedienelements 8, nämlich seines Bremspedals, mechanisch initiierbar. Hierfür ist (lediglich prinzipiell) am Stator der Elektromaschine 2 ein weiterer Mitnehmer 9 vorgesehen, auf den das Bremspedal bzw. Bedienelement 8 derart einwirken kann, dass mit einer Betätigung des Bedienelements 8 die Elektromaschine, genauer deren Stator, abermals - wie bereits anhand von Fig.2 erläutert wurde und nun in Fig.4 gezeigt ist - derart verschwenkt wird, dass über das mechanische Übertragungselement 7 das genannte, figürlich nicht dargestellte Bremselement im Bremssinne betätigt wird. Was die Einwirkung des Bedienelements 8 auf den weiteren Mitnehmer 9 betrifft, so ist die Auslegung vorzugsweise derart getroffen, dass dies nur bei einem Ausfall der Elektronik oder Elektrik erfolgt, d.h. wenn die Elektromaschine 2 aus irgendwelchen Gründen nicht als Rekuperationsbremse wirken kann. Für diesen Fall ist hier eine sog. mechanische Rückfallebene geschaffen. In Fig.3 ist die Elektromaschine 2 analog Fig.1 im Betriebszustand als Elektromotor und somit als Antriebsaggregat dargestellt, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Bremsanlage eines Kraftfahrzeugs, das zumindest anteilig von einer Elektromaschine (2) antreibbar ist, die zur Bereitstellung von Bremsenergie für das Fahrzeug als Generator betreibbar ist, um als sog. Rekuperationsbremse zu wirken,
wobei der Stator der Elektromaschine (2) um die Rotationsachse (10) des Rotors der Elektromaschine begrenzt verschwenkbar und dabei gegen ein Kraftspeicherelement (6) derart abgestützt im Kraftfahrzeug oder an einem Rad oder einem anderen geeigneten Element des Kraftfahrzeugs gelagert ist, dass eine bei Initiierung des Generator-Betriebs erfolgende Verschwenkbewegung des Stators der Elektromaschine (2) über ein Übertragungselement (7) ein mechanisches, letztlich auf die Räder des Fahrzeugs einwirkendes Bremselement betätigt,
**dadurch gekennzeichnet, dass** eine eine Betätigung des mechanischen Bremselements bewirkende Verschwenkbewegung des Stators der Elektromaschine (2) vom Fahrer des Kraftfahrzeugs mittels eines Bedienelements (8), insbesondere des Bremspedals, mechanisch initiierbar ist, indem am Stator der Elektromaschine (2) ein Mitnehmer (9) vorgesehen ist, auf den das Bedienelement (8) derart einwirken kann, dass mit dessen Betätigung die Elektromaschine (2) dann, wenn diese nicht als Rekuperationsbremse wirken kann, wie vorstehend beschrieben eine Betätigung des Bremselements verursachend, verschwenkt wird.

2. Bremsanlage nach Anspruch 1, wobei das mechanische Bremselement als Trommelbremse oder Keilbremse ausgebildet ist.

3. Bremsanlage nach Anspruch 1 oder 2, wobei das Kraftspeicherelement (6) ein mit einer bestimmten Kraft vorgespanntes Federelement ist.

## Claims

1. A braking system of a motor vehicle, which can be driven at least proportionately by an electric machine (2), which can be operated as a generator to provide braking energy for the vehicle in order to act as a so-called recuperation brake, wherein the stator of the electric machine (2) can be pivoted to a limited extent about the rotational axis (10) of the rotor of the electric machine and in the process is mounted so as to be supported against an energy storage element (6) in the motor vehicle or on a wheel or another suitable element of the motor vehicle in such a way that a pivoting movement of the stator of the electric machine (2), which takes place on initiation of the generator operation, by means of a transmission element (7) actuates a mechanical braking element ultimately acting on the wheels of the vehicle, **characterised in that** a pivoting movement of the stator of the electric machine (2) bringing about an actuation of the mechanical braking element can be mechanically initiated by the driver of the motor vehicle by means of an operating element (8), more especially the brake pedal, **in that** an entrainer (9) is provided on the stator of the electric machine (2), on which entrainer the operating element (8) can act in such a way that with the actuation thereof, the electric machine (2), when the latter cannot act as a recuperation brake, is pivoted, as described above, causing an actuation of the braking element.

2. A braking system according to claim 1, wherein the mechanical braking element is configured as a drum brake or wedge brake.

3. A braking system according to claim 1 or 2, wherein the energy storage element (6) is a spring element prestressed by a specific force.

## Revendications

1. Installation de frein de véhicule automobile, entraîné au moins en partie par une machine électrique (2) et qui, pour fournir de l'énergie de freinage pour le véhicule, peut fonctionner comme générateur pour agir comme un frein dit de récupération,
- le stator de la machine électrique (2) pouvant pivoter de manière limitée autour de l'axe de rotation (10) du rotor de la machine électrique et alors s'appuyer contre un élément accumulateur de force (6) dans le véhicule ou être monté sur une roue ou autre élément approprié du véhicule pour que le mouvement de basculement du stator de la machine électrique (2) de l'initialisation du mode de fonctionnement en générateur, actionne par un élément de transmission (7), un élément de frein agissant finalement sur les roues du véhicule,
installation **caractérisée en ce que**
le mouvement de pivotement du stator de la machine électrique (2) produisant l'actionnement de l'élément de frein mécanique est initié mécaniquement par le conducteur du véhicule par un élément de service (8), notamment la pédale de frein, **en ce que** le stator de la machine électrique (2) comporte un organe d'entraînement (9) sur lequel peut agir l'élément de service (8) de façon que par son actionnement, la machine électrique (2), lorsqu'elle ne peut pas fonctionner comme frein de récupération comme décrit ci-dessus, soit basculée de façon à produire l'actionnement de l'élément de frein.

2. Installation selon la revendication 1,
**caractérisée en ce que**
l'élément de frein mécanique est un frein à tambour ou un frein à coin.

3. Installation selon la revendication 1 ou 2,
**caractérisée en ce que**
l'élément accumulateur de force (6) est un élément de ressort précontraint avec une certaine force.
